# EUROPÄISCHE PATENTSCHRIFT

(11) **EP 2 635 479 B1**
(45) Veröffentlichungstag und Bekanntmachung des Hinweises auf die Patenterteilung: **29.06.2016**
(21) Anmeldenummer: 11776365.6
(22) Anmeldetag: 27.10.2011
(51) Int. Cl.: B60W 30/18, B60K 6/48, B60W 20/00, B60W 10/06, B60W 10/08

(54) **KRAFTFAHRZEUG MIT EINEM HYBRIDANTRIEB UND VERFAHREN ZUR AUSWAHL EINER ELEKTROMASCHINE UND/ODER EINES ANLASSERS ZUM ANLASSEN EINES VERBRENNUNGSMOTORS**
MOTOR VEHICLE HAVING A HYBRID DRIVE AND METHOD FOR SELECTING AN ELECTRIC MOTOR AND/OR A STARTER FOR STARTING AN INTERNAL COMBUSTION ENGINE
VÉHICULE AUTOMOBILE À ENTRAÎNEMENT HYBRIDE ET PROCÉDÉ DE SÉLECTION D'UNE MACHINE ÉLECTRIQUE ET/OU D'UN DÉMARREUR POUR LE DÉMARRAGE D'UN MOTEUR À COMBUSTION INTERNE

(30) Priorität: 03.11.2010 DE 102010050123
(43) Veröffentlichungstag der Anmeldung: 11.09.2013
(73) Patentinhaber: Audi AG, 85045 Ingolstadt (DE)
(72) Erfinder: WERNER, Martin, 89233 Neu-Ulm (DE); SCHNEIDER, Michael, 85137 Pfünz (DE)
(74) Vertreter: Wohnert, Dietmar
(86) Internationale Anmeldenummer: PCT/EP2011/005414
(87) Internationale Veröffentlichungsnummer: WO 2012/059196

(56) Entgegenhaltungen:
- EP-A2- 0 989 300
- DE-A1-102007 061 895
- DE-A1-102008 002 666
- DE-A1-102008 027 658
- US-A1- 2008 127 935

## Beschreibung

Die Erfindung betrifft ein Kraftfahrzeug mit einem Hybridantrieb, umfassend einen Verbrennungsmotor, eine Elektromaschine, die als Motor betreibbar und zum Anlassen des Verbrennungsmotors verwendbar ist, eine Steuereinrichtung sowie einen zum Anlassen des Verbrennungsmotors verwendbaren Anlasser. Daneben betrifft die Erfindung ein Verfahren zur Auswahl einer Elektromaschine und/oder eines Anlassers zum Anlassen eines Verbrennungsmotors in einem Kraftfahrzeug mit einem Hybridantrieb.

Kraftfahrzeuge mit einem Hybridantrieb, die sowohl einen Verbrennungsmotor als auch eine Traktions-Elektromaschine umfassen, sind im Stand der Technik weithin bekannt und aufgrund ihrer energiesparenden Fahrweise vorteilhaft. Im Gegensatz zu Kraftfahrzeugen, die allein mit Verbrennungskraftmaschinen ausgestattet sind, sind Kraftfahrzeuge mit Hybridantrieb bekannt, bei denen die Verbrennungsmotoren über einen Schlepp- und/oder Impulsstart mit der Elektromaschine angelassen werden. Das bedeutet, dass beispielsweise bei einem Schleppstart die Trennkupplung zwischen dem Verbrennungsmotor und der Elektromaschine kurz geschlossen wird, sodass die Elektromachine den Motor "mitzieht". Demgegenüber wird bei einem Impulsstart üblicherweise die Drehzahl des Elektromotors kurzzeitig erhöht, um diesen "Impuls" nach einem Schließen der Trennkupplung an den Verbrennungsmotor zu übertragen und diesen in die korrekte Zündposition zu bringen. Es sind auch Mischformen zwischen beiden Anlassarten denkbar.

Läuft der Verbrennungsmotor, so ist es bei vielen Hybridfahrzeugen bekannt, die Elektromaschine so auszubilden, dass sie auch als Generator wirkt, das bedeutet, die Elektromaschine kann sowohl als Motor als auch als Generator verwendet werden.

Nachteilhafterweise erfordern Schlepp- und/oder Impulsstarts des Verbrennungsmotors mit der Traktions-Elektromaschine eine aufwändige Steuerung, um ein Ruckeln beim Anlassen zu verhindern. Zudem benötigen sie ein ständiges Vorhalten von Momenten, um beispielsweise auch bei deutlichem Beschleunigen durch die Elektromaschine noch die Verbrennungskraftmaschine zuzuschalten. Aus der DE 103 46 919 A1 ist ein Hybridfahrzeug bekannt, bei dem auch in einem Notfall, beispielsweise also, wenn der Ladezustand einer die Elektromaschine betreibenden Hochspannungsbatterie sehr niedrig ist, noch ein Anlassen einer Wärmekraftmaschine möglich sein soll. Hierzu ist ein mit einer niedrigen Spannung, typischerweise 12 V, betriebener Anlassermotor vorgesehen. Falls die Batterie oder das Batterieaggregat des Systems mit höherer Spannung unzureichend geladen ist, aber die Niedrigspannungsbatterie mit 12 V ausreichend geladen ist, kann der Anlassermotor über die Batterie mit 12 V genutzt werden, um die Wärmekraftmaschine zu starten.

Damit können aber die oben beschriebenen Nachteile nicht umgangen werden.

DE 10 2008 027 658 A1 betrifft ein Verfahren zum Starten einer Brennkraftmaschine eines Hybridfahrzeugs. Die Brennkraftmaschine wird in Abhängigkeit von vorbestimmten Betriebsparametern, insbesondere sobald ein vorbestimmter elektrischer Fahrbereich verlassen wird, zugestartet. Es kann in Abhängigkeit von der Lastanforderung zwischen zwei Zustartarten unter-schieden werden. In einer ersten Startart wird eine separate Startereinrichtung verwendet, in einer zweiten Startart die elektrische Antriebsmaschine. Zur Nutzung der zweiten Startart können eine Unterschreitung einer Ladeschwelle des Energiespeichers oder eine schleichende Erhöhung der Lastanforderung berücksichtigt werden.

Der Erfindung liegt daher die Aufgabe zugrunde, eine Möglichkeit anzugeben, in allen Fahrsituationen ein möglichst ruckelfreies und schnelles Anlassen des Verbrennungsmotors zu ermöglichen.

Zur Lösung dieser Aufgabe sind bei einem Kraftfahrzeug der eingangs genannten Art erfindungsgemäß die Merkmale des Anspruchs 1 vorgesehen.

Auch die vorliegende Erfindung schlägt mithin vor, ein Hybridfahrzeug zusätzlich zu der Elektromaschine, die als Traktionsmaschine und zweckmäßigerweise auch als Generator betreibbar ist, auch mit einem konventionellen Anlasser, umfassend einen Anlassermotor, zu versehen. Der Anlasser bzw. sein Anlassermotor können dabei zweckmäßigerweise durch eine Niedrigspannungsbatterie, beispielsweise eine übliche 12 V-Batterie in Kraftfahrzeugen, betrieben werden. Selbstverständlich ist es auch denkbar, auch einen anderweitig betriebenen Anlasser zu verwenden, beispielsweise einen auf einer Zwischenspannung, beispielsweise 78 V, betriebenen Anlasser, der über einen Gleichspannungswandler aus einem Hochspannungsnetz gespeist sein kann oder dergleichen. Schließlich ist es auch denkbar, einen Anlasser mit einem Anlassermotor so auszulegen, dass er im Hochspannungsnetz des Kraftfahrzeugs selber betrieben werden kann. Die Spannung, bei der der Anlasser betrieben werden kann, ist also im Rahmen der vorliegenden Erfindung beliebig wählbar.

Im Rahmen der vorliegenden Erfindung ist der zusätzliche Anlasser nun jedoch nicht (nur) als eine Sicherheitsmaßnahme vorgesehen, sondern es werden in Abhängigkeit der Betriebsstrategie der Anlasser, die Elektromaschine oder gar der Anlasser und die Elektromaschine zum Anlassen des Verbrennungsmotors benutzt.

Dabei wird konkret vorgeschlagen, die Auswahl in Abhängigkeit von die Betriebsstrategie beschreibenden Betriebsparametern bzw. Kommunikationssignalen anderer Steuergeräte vorzunehmen. So soll beispielsweise bei einer hohen Fahrdynamikanforderung, wenn also beispielsweise sehr schnell beschleunigt werden soll oder sehr schnell auf Beschleunigungsbetrieb umgeschaltet werden soll, mithin Schwellwerte für die entsprechenden Betriebsparameter überschritten werden, der Anlasser verwendet werden, da dann ein schnelleres Starten des Verbrennungsmotors ermöglicht wird und mithin die Fahrdynamikanforderung schneller erfüllt werden kann. Analog kann die Momentenanforderung an den Hybridantrieb betrachtet werden, da es mit höherer Momentenanforderung, die durch die Elektromaschine erfüllt werden muss, auch notwendig wäre, ein Moment zusätzlich vorzuhalten, um die Verbrennungskraftmaschine tatsächlich zuzuschalten. Wird also in solchen Situationen, in denen die Elektromaschine ohnehin gut ausgelastet ist, der Anlasser verwendet, so wird neben dem schnelleren Zuschalten des Verbrennungsmotors auch ein durch den Schlepp- und/oder Impulsstart ausgelöstes Ruckeln vermieden. Es sei an dieser Stelle angemerkt, dass unter der Momemtenanforderung an den Hybridantrieb im Rahmen der vorliegenden Erfindung auch zu verstehen ist, welches Moment benötigt würde, um den Verbrennungsmotor in seine Zündstellung zu bringen, das bedeutet, es kann auch die Momentenanforderung des Verbrennungsmotors an die Elektromaschine bzw. den Anlasser betrachtet werden, um die letztendliche Auswahl zu treffen, worauf im Folgenden noch näher eingegangen werden wird.

Insgesamt können hier beispielsweise wenigstens eine Fahrdynamikanforderungsgröße und/oder wenigstens eine Momentenanforderungsgröße betrachtet werden, die aus verschiedenen Betriebsparametern, beispielsweise bezüglich der Pedalerie, der Geschwindigkeit und/oder des eingelegten Gangs, ermittelt werden können. Schwellwertbasiert oder auch in funktionaler Abhängigkeit kann nun entschieden werden, welches System (also Anlasser oder Elektromaschine) zum Anlassen verwendet wird, oder ob beide verwendet werden und in diesem Fall, wie stark beide beitragen. Die unterschiedlichen Größen können selbstverständlich auch, wie dies allgemein bekannt ist, verknüpft werden, gegebenenfalls auch mit den von anderen Steuergeräten erhaltenen Anforderungen, welche zweckmäßigerweise priorisiert werden können.

Solche Anforderungen, die beispielsweise von weiteren Fahrzeugsystemen bzw. deren Steuergeräten an die Steuereinrichtung gesendet werden, beschreiben außerhalb der Krafterzeugung liegende Umstände, die einen Nutzen des Anlassers oder der Elektromaschine günstiger erscheinen lassen können. Insbesondere das Getriebe ist hierbei zu nennen, da beispielsweise bei niedrigen Drehzahlen oder in niedrigen Gängen ein Ruckeln des Kraftfahrzeugs vermieden werden kann, wenn der Anlasser statt der Elektromaschine zum Anlassen des Verbrennungsmotors verwendet wird.

Die vorliegende Erfindung ermöglicht also ein bedarfsgerechtes Anlassen des Verbrennungsmotors durch die Elektromaschine oder den Anlasser, wobei insbesondere bei der Verwendung des Anlassers die Leistung bzw. das Drehmoment der Traktions-Elektromaschine vollständig zum Vortrieb zur Verfügung steht. Abgestimmt auf die aktuelle Betriebsstrategie bzw. die Anforderungen des Fahrers kann somit ein Ruckeln des Kraftfahrzeugs vermieden werden bzw. schneller auf die Wünsche des Fahrers reagiert werden.

In konkreter Ausgestaltung der vorliegenden Erfindung kann vorgesehen sein, dass die Steuereinrichtung zur Auswahl des zum Anlassen des Verbrennungsmotors verwendeten Systems in Abhängigkeit der Stellung eines Gaspedals und/oder der Dynamik der Betätigung eines Gaspedals und/oder eines Bremspedals, insbesondere des Gradienten, und/oder in Abhängigkeit von einer aktuellen Zylinderstellung des Verbrennungsmotors ausgebildet ist. Selbstverständlich ist auch die Berücksichtigung anderer und/oder weiterer, die Dynamik bzw. die Momentenanforderung beschreibender Betriebsparameter des Kraftfahrzeugs möglich, sodass beispielsweise auch die Geschwindigkeit oder ein eingelegter Gang mit berücksichtigt werden können.

Zweckmäßigerweise kann vorgesehen sein, dass die Steuereinrichtung bei einer eine niedrige Beschleunigungsanforderung beschreibenden Gaspedalstellung und/oder einer eine niedrige Fahrdynamikanforderung beschreibenden Gaspedaldynamik zum Verwenden der Elektromaschine und bei einer eine hohe Beschleunigungsanforderung beschreibenden Gaspedalstellung und/oder eine hohe Fahrdynamikanforderung beschreibenden Gaspedaldynamik und/oder bei einem schnellen Wechsel von einem Bremspedal zu dem Gaspedal zum Verwenden des Anlassers zum Anlassen des Verbrennungsmotors ausgebildet ist. Zur konkreten Umsetzung solcher Anfragen sind Schwellwerte in der Steuereinrichtung hinterlegt, deren konkrete Werte von dem konkreten Kraftfahrzeug abhängen. Wird also das Gaspedal besonders weit vorgetreten, wird ohnehin eine hohe, einen Schwellwert überschreitende Momentenanforderung an den Hybridantrieb gestellt, sodass idealerweise der Anlasser verwendet wird, um das Vorhalten von Momenten der Elektromaschine zum Anlassen des Verbrennungsmotors möglichst zu vermeiden. Dies kann selbstverständlich gemeinsam mit der Gaspedaldynamik betrachtet werden, wobei beispielsweise ein hoher, einen Schwellwert überschreitender Gradient, also ein schnelles Treten des Gaspedals, daraufhin deutet, das der Fahrerwunsch auf eine möglichst schnell stattfindende, starke Beschleunigung gerichtet ist, sodass ein schnelles Zuschalten des Verbrennungsmotors gewünsch ist, welches ebenso für eine Verwendung des Anlassers spricht. Auch die Tatsache, dass ein Bremspedal schnell verlassen wird, um auf das Gaspedal zu wechseln, kann auf eine hohe Wunschdynamik und somit ein schnelles Schalten des Verbrennungsmotors durch den Anlasser hinweisen. Aufgenommen werden können derartige Betriebsparameter beispielsweise durch eine geeignete Sensorik an der Pedalerie. Die entsprechenden Sensordaten werden von der Steuereinrichtung verarbeitet, um beispielsweise die oben bereits erwähnte Fahrdynamikanforderungsgröße und/oder Momentenanforderungsgröße zu ermitteln und entsprechend die Auswahl zu treffen.

Es kann ferner vorgesehen sein, dass als die Fahrdynamikanforderung beschreibender Betriebsparameter ein den Fahrstil und/oder einen Fahrerwunsch beschreibender Betriebsparameter berücksichtigt wird. Die Auswahl, ob mit der Elektromaschine und/oder dem Anlasser gestartet werden soll, kann also auch in Abhängigkeit der subjektiven, dennoch an Betriebsparametern abzulesenden Erwartungshaltung des Fahrers an die Dynamik des Kraftfahrzeugs festgemacht werden. So kann in einer einfachen Ausgestaltung ein die Auswahl eines Betriebsprogramms des Kraftfahrzeugs beschreibender Betriebsparameter herangezogen werden. Kraftfahrzeuge bieten ab und an verschiedene Betriebsprogramme an, beispielsweise ein sportliches Betriebsprogramm, ein komfortables Betriebsprogramm und/oder ein effektives, insbesondere den Energieverbrauch minimierendes Betriebsprogramm. Solche Betriebsprogramme umfassen üblicherweise einen Satz einzustellender Betriebsparameter für Fahrzeugsysteme, wobei beispielsweise in einem sportlichen Betriebsprogramm bzw. Betriebsmodus ein schnelleres Ansprechen von Motor, Bremse und Lenkung eingestellt werden kann. Ist ein sportliches Betriebsprogramm eingestellt, kann im Rahmen der vorliegenden Erfindung auch vorgesehen sein, dass Schwellen zur Nutzung des Anlassers erniedrigt werden, so dass häufiger die Energie der Elektromaschine zur Steigerung der Fahrdynamik zur Verfügung steht.

Denkbar ist es in diesem Zusammenhang jedoch auch, den Fahrstil des Fahrers zu überwachen, beispielsweise, um den Fahrer als eher sportlich oder eher komfortabel fahrenden Fahrertypen einzuordnen. Solche Vorgehensweise, die verschiedene Mess- und Betriebsgrößen des Kraftfahrzeugs analysieren, um wenigstens eine den Fahrertyp beschreibende Fahrerinformation zu ermitteln, sind grundsätzlich bekannt, so dass die erhaltenen Fahrerinformationen als Betriebsparameter auch in die Entscheidung zur Auswahl zum Start des Verbrennungsmotors einbezogen werden können. Auch so kann die Erwartungshaltung des Fahrers mitbeachtet werden.

Vorzugsweise kann ferner vorgesehen sein, dass als weiteres Steuergerät ein Getriebesteuergerät vorgesehen ist, welches bei einer niedrigen Drehzahl und/oder abhängig von dem Zustand einer Anfahrkupplung zum Senden einer Anforderung zur Auswahl des Anlassers an die Steuereinrichtung ausgebildet ist. Wie bereits erwähnt, sind Gesamtzustände des Kraftfahrzeugs denkbar, die bei einem Start des Verbrennungsmotors mittels der Elektromaschine zu spürbaren Effekten im Kraftfahrzeug, beispielsweise zu einem Ruckeln, führen können. Dies kann beispielsweise dann auftreten, wenn im Getriebe gerade eine niedrige Drehzahl gegeben ist oder bei bestimmten Zuständen der Anfahrkupplung. Liegt eine solche Situation vor, kann das Getriebesteuergerät eine Anforderung an die Steuereinrichtung senden, das ein bevorstehender Anlassvorgang des Verbrennungsmotors über den Anlasser durchgeführt wird. Ähnliche Zustände und Situationen sind auch bezüglich anderer Steuergeräte und anderer Fahrzeugsysteme denkbar. Erfindungsgemäß ist vorgesehen, dass die Steuereinrichtung zur Berücksichtigung wenigstens eines einen die Auswahl des Anlassers oder der Elektromaschine zum Anlassen des Verbrennungsmotors beeinflussenden Parameter dem eingelegten Gang zuordnenden Kennfeldes ausgebildet ist. In weiterer Ausgestaltung der Erfindung kann vorgesehen sein, dass die Steuereinrichtung zur Berücksichtigung des oder wenigstens eines weiteren einen die Auswahl des Anlassers oder der Elektromaschine zum Anlassen des Verbrennungsmotors beeinflussenden Parameter wenigstens einem weiteren Betriebsparameter, insbesondere der aktuellen Geschwindigkeit des Kraftfahrzeugs und/oder einer eingestellten Startvariante, zuordnenden Kennfeldes ausgebildet ist. Solche insbesondere in Abhängigkeit von Gang und Geschewindigkeit, aber auch einer eingestellten Startvariante bzw. Startart ermittelbaren Hinweise, ob der Anlasser oder der Elektromotor zu verwenden ist, können beispielsweise durch Messungen und/oder in Testfahrten ermittelt werden. Dabei kann immer dann, wenn ein Ruckeln verzeichnet wird, durch den die Auswahl des Anlassers oder der Elektromaschine zum Anlassen des Verbrennungsmotors beeinflussenden Parameter ein Verwenden des Anlassers gefordert sein oder dergleichen.

In weiterer Ausgestaltung der vorliegenden Erfindung kann vorgesehen sein, dass ein Sensor zur Messung der Zylinderstellung des Motors, insbesondere ein Kurbelwellensensor, vorgesehen ist. Um eine Zylinderstellung des Motors festzustellen, wird häufig ein Kurbelwellensensor verwendet, der letztlich die Umdrehungen der Kurbelwelle und somit die Stellung des Verbrennungsmotors nachverfolgt. Anhand der Messdaten eines derartigen Sensors kann ermittelt werden, wie viel Moment nötig wäre, um den Verbrennungsmotor in den Verdichtungszustand zu bringen, wo ein Zünden möglich ist. Wird ein großes Moment benötigt, um diesen Zustand zu erreichen, so kann vorgesehen werden, dass der Anlasser statt der Elektromaschine den Anlassvorgang durchführt, da ein solch großes Moment leichter im Kraftfahrzeug spürbar ist. Es sei an dieser Stelle noch angemerkt, dass dann, wenn keine Information über die aktuelle Abstellposition des Verbrennungsmotors vorliegt, vorgesehen sein kann, dass angenommen wird, dass ein maximales Moment benötigt wird ("worst case"). In einem solchen Fall kann dann grundsätzlich vorgesehen werden, dass der Anlasser zum Starten des Verbrennungsmotors verwendet wird.

Wie bereits erwähnt, kann der Start des Verbrennungsmotors durch die Elektromaschine durch einen Schleppstart und/oder einen Impulsstart erfolgen. Dies sind gängige Vorgehensweisen, um das Moment der als Motor betriebenen Elektromaschine zu nutzen, um den Verbrennungsmotor in die korrekte Zündposition zu bringen.

Es kann vorgesehen sein, dass zur Versorgung des Anlassers eine Niedrigspannungsbatterie vorgesehen ist, die eine niedrigere Spannung als eine zur Versorgung der Elektromaschine vorgesehene Hochspannungsbatterie aufweist. Beispielsweise kann also der Anlasser Teil eines Niedrigspannungsnetzes sein, das beispielsweise auf 12 V liegen kann, wie dies bei Kraftfahrzeugen üblich ist. Häufig wird parallel für die Elektromaschine ein Hochspannungsnetz realisiert, das von einer Hochspannungsbatterie gespeist wird. Dort können beispielsweise Spannungen bis hin zu 600 V vorliegen.

Dann kann in besonders vorteilhafter Ausgestaltung der vorliegenden Erfindung vorgesehen sein, dass die Steuereinrichtung zusätzlich bei einem niedrigen Ladezustand der Niedrigspannungsbatterie zum Verwenden der Elektromaschine und bei einem niedrigen Ladezustand der Hochspannungsbatterie zum Verwenden des Anlassers zum Anlassen des Verbrennungsmotors ausgebildet ist. Es können folglich auch die Ladezustände der Batterien berücksichtigt werden, wenn es um die Auswahl eines geeignete Systems für den Anlassvorgang geht. Auf diese Weise wird letztlich der Anlasser zusätzlich noch als ein "Sicherheitssystem" genutzt, sodass selbst bei einer entladenen Hochspannungsbatterie noch ein Starten des Verbrennungsmotors möglich ist. Analog kann, wenn die Energie in der Niedrigspannungsbatterie nicht mehr ausreichend ist, sicherheitshalber die Elektromaschine herangezogen werden, auch wenn es in der aktuellen Fahrsituation sinnvoller wäre, den Anlasser zu verwenden. Insbesondere sind auch Ausgestaltungen denkbar, in denen bei einem niedrigen Ladezustand beider Batterien beide Systeme eingesetzt werden, um den Verbrennungsmotor des Kraftfahrzeugs zu starten. Damit kann ermöglicht werden, dass der Verbrennungsmotor gestartet wird, obwohl die Energie in beiden Batterien für sich nicht ausreichend gewesen wäre.

Neben dem Kraftfahrzeug betrifft die vorliegende Erfindung auch ein Verfahren zur Auswahl einer Elektromaschine und/oder eines Anlassers zum Anlassen eines Verbrennungsmotors in einem Kraftfahrzeug mit einem Hybridantrieb, welches sich dadurch auszeichnet, dass die Auswahl in Abhängigkeit wenigstens eines die Fahrdynamikanforderung und/oder die Momentenanforderung an den Hybridantrieb beschreibenden Betriebsparameters des Kraftfahrzeugs und/oder einer Anforderung eines Steuergeräts des Kraftfahrzeugs erfolgt. Auch beim Verfahren wird also vorgeschlagen, die aktuelle Betriebsstrategie des Kraftfahrzeugs zu berücksichtigen, um somit insbesondere bei einem Wunsch des Fahrers nach einer hohen Dynamik ein schnelles Starten des Verbrennungsmotors zu gewährleisten und andererseits ein durch das Abzweigen eines Moments von dem Elektromotor ausgelöstes Ruckeln oder sonstiges merkbares ungleichmäßiges Laufen des Kraftfahrzeugs zu vermeiden. Gleichzeitig können dabei Hinweise anderer Fahrzeugsysteme über deren Steuergerät berücksichtigt werden, beispielsweise eine Anforderung eines Getriebesteuergeräts.

Insgesamt lassen sich sämtliche Ausführungen zum erfindungsgemäßen Kraftfahrzeug analog auf das erfindungsgemäße Verfahren übertragen, sodass auch hiermit die dort beschriebenen Vorteile erreicht werden können.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: ein erfindungsgemäßes Kraftfahrzeug, und
- Fig. 2: eine Illustration zur erfindungsgemäßen Auswahlstrategie.

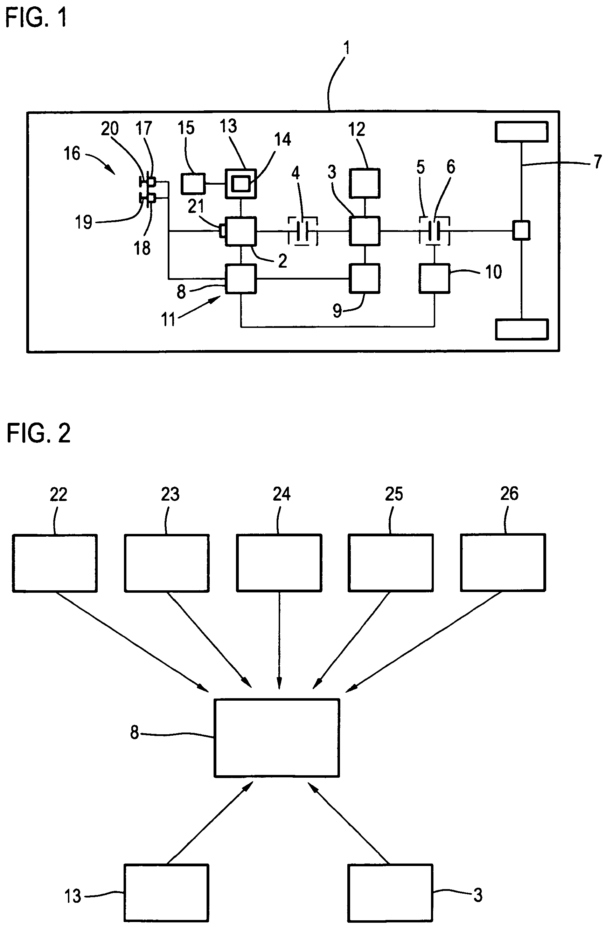

Fig. 1 zeigt eine Prinzipskizze eines erfindungsgemäßen Kraftfahrzeugs 1 mit Hybridantrieb. Hierzu umfasst das Kraftfahrzeug 1 neben einem üblichen Verbrennungsmotor 2 auch eine Traktions-Elektromaschine 3, die als Motor oder als Generator betrieben werden kann. Die beiden Kraftmaschinen können über eine Trennkupplung 4 verbunden werden.

Die erzeugte Antriebsenergie, also der Vortrieb, wird durch ein Getriebe 5 mit einer Anfahrkupplung 6 auf eine Antriebsachse 7 gegeben.

Die verschiedenen Komponenten im Antriebsstrang des Kraftfahrzeugs 1 werden durch Steuergeräte angesteuert, wobei im vorliegenden Fall sowohl dem Verbrennungsmotor 2 ein Steuergerät 8 wie auch der Elektromaschine 3 ein Steuergerät 9 zugeordnet ist. Das Getriebe 5 wird über ein Getriebesteuergerät 10 angesteuert.

Vorliegend bildet das Steuergerät 8 ein Master-Steuergerät für die Kraftmaschinen des Kraftfahrzeugs 1. Selbstverständlich sind auch Ausgestaltungen denkbar, in denen die Steuergeräte 8 und 9 ein einziges Steuergerät integriert sind. Die Steuergeräte 8 und 9 können als eine Steuereinrichtung 11 aufgefasst werden.

Während es in dem Kraftfahrzeug 1 möglich ist, den Verbrennungsmotor 2 durch Schlepp- und/oder Impulsstart mittels der Elektromaschine 3 anzulassen, die im Übrigen von einer Hochspannungsbatterie 12 versorgt wird, umfasst das Kraftfahrzeug 1 auch einen üblichen Niedrigspannungs-Anlasser 13 mit einem Anlassermotor 14. Dieser kann Teil eines Niedrigspannungsnetzes sein, welches von einer Niedrigspannungsbatterie 15, beispielsweise bei einer Betriebsspannung von 12 V, betrieben wird. Die Steuereinrichtung 11 ist nun dazu ausgebildet, bei einem bevorstehenden Anlassen des Verbrennungsmotors 2 auszuwählen, ob der Verbrennungsmotor 2 durch den Anlasser 13 und/oder die Elektromaschine 3 angelassen werden soll. Hierzu werden verschiedene Betriebsparameter sowie Anforderungssignale anderer Steuergeräte, beispielsweise des Getriebesteuergeräts 10, berücksichtigt. Vorliegend gehen in die Berechnungen, die beispielsweise im Steuergerät 8 durchgeführt werden können, als Betriebsparameter Sensordaten von an einer Pedalerie 16 angeordneten Pedaleriesensoren 17, 18 ein, die beispielsweise die aktuelle Stellung und die Dynamik, insbesondere den Gradienten, des Gaspedals 19 und des Bremspedals 20 messen und an das Steuergerät 8 liefern. Zudem erhält das Steuergerät 8 die Messdaten eines Kurbelwellensensors 21, woraus die aktuelle Abstellposition des Verbrennungsmotors 2 gefolgert werden kann. Selbstverständlich können auch weitere Betriebsparameter bzw. die Daten weiterer Sensoren eingehen, vorliegend konkret der eingelegte Gang, beispielsweise aber auch die Geschwindigkeit des Kraftfahrzeug und dergleichen, über die aus einem Kennfeld eine die Auswahl des System zum Anlassen des Verbrennungsmotors 2 (mit)bestimmende Größe ermittelt werden kann. Schließlich kann das Steuergerät 8 noch den Ladezustand der Batterien 15, 12 bei der Auswahl des Systems zum Anlassen des Verbrennungsmotors 2 berücksichtigen.

Etwas konkreter zeigt das erfindungsgemäße Vorgehen das Diagramm der Fig. 2. Dort ist ersichtlich, dass zunächst die Fahrdynamikanforderung beschreibende Betriebsparameter 22 berücksichtigt werden. Hieraus kann beispielsweise eine die gewünschte Fahrdynamik - letztlich also der Wunsch des Fahrers nach einer schnellen Reaktion des Kraftfahrzeugs 1 - beschreibende Fahrdynamikgröße aus den betrachteten Betriebsparametern 22 ermittelt werden, die mit einem oder mehreren Schwellwerten verglichen wird. So kann beispielsweise dann, wenn eine hohe Dynamik gefordert ist, der Anlasser 13 verwendet werden, nachdem dieser für ein schnelleres Anlassen des Verbrennungsmotors 2 sorgt. Derartiges kann zum Beispiel aus dem Gradienten der Gaspedalbetätigung und/oder einem schnellen Wechsel von dem Bremspedal 20 auf das Gaspedal 19 abgeleitet werden.

Daneben werden Betriebsparameter 23 berücksichtigt, die die Momentenanforderung an den Hybridantrieb beschreiben, woraus ebenso eine mit wenigstens einem Schwellwert zu vergleichende Momentenanforderungsgröße ermittelt werden kann. Hier geht beispielsweise die Stellung des Gaspedals als Betriebsparameter ein. Damit werden Fälle abgegriffen, die ein deutliches Schwanken der zum Vortrieb genutzten Leistung der Elektromaschine 3 zur Folge hätten, also beispielsweise ein Ruckeln oder dergleichen. Steht derartiges zu befürchten, kann ebenso der Anlasser 13 verwendet werden.

Weiterhin finden die Messdaten 24 des Kurbelwellensensors 21 Eingang in die Betrachtung, denn hieraus kann abgeschätzt werden, welches Moment erforderlich ist, um die Zylinder des Verbrennungsmotors 2 in die Zündposition zu bringen. Wird hierfür viel Moment benötigt oder ist die aktuelle Stellung der Zylinder des Verbrennungsmotors 2 unbekannt, so kann ebenso der Anlasser 13 gewählt werden.

Weiterhin ist es auch möglich, dass Anforderungen 26 anderer Steuergeräte, beispielsweise des Getriebesteurgeräts 10, berücksichtigt werden, vgl. Anforderungen 26. Beispielsweise kann dann, wenn niedrige Drehzahlen gegeben sind, ein Schleppstart zu einem Ruckeln führen. Entsprechend kann das Getriebe eine Anforderung 26 zum Nutzen des Anlassers 13 an das Steuergerät 8 schicken. Ähnlich kann der Zustand der Anfahrkupplung 6 betrachtet werden, der ebenso bei Schließ- oder Öffnungsvorgängen zu einem Ruckeln führen kann, wenn ein Schlepp- und/oder Impulsstart vorgenommen wird.

Schließlich erlaubt es die vorliegende Erfindung auch, die Ladezustände 25 der Batterien 12, 15 zu berücksichtigen. So kann beispielsweise, falls die Hochspannungsbatterie 12 einen zu niedrigen Ladestand aufweist, der Anlasser 13 verwendet werden und umgekehrt.

Entsprechend steuert das Steuergerät 8 als Teil der Steuereinrichtung 11, wie aus Fig. 2 ersichtlich, den Anlasser 13 und/oder die Elektromaschine 3 an.

Es sei an dieser Stelle noch angemerkt, dass letztlich auch die Messdaten 24 als die Momentenanforderung an den Hybridantrieb beschreibende Betriebsparameter 23 aufgefasst werden können, nachdem dieses Zusatzmoment ja von der Elektromaschine 3 geliefert werden muss.

Als die Fahrdynamikanforderung beschreibende Betriebsparameter 22 können auch generell den Wunsch des Fahrers beschreibende Parameter berücksichtigt werden, beispielsweise ein von dem Fahrer eingestelltes Betriebsprogramm und/oder ein genereller Fahrstil des Fahrers, der beispielsweise aus entsprechenden während der Fahrt aufgenommenen Daten ermittelt werden kann. Derartige Betriebsparameter 22 können Einfluss auf Schwellwerte haben, mit denen andere Betriebsparameter 22, 23 verglichen werden.

## Patentansprüche

1. Kraftfahrzeug (1) mit einem Hybridantrieb, umfassend einen Verbrennungsmotor (2), eine Elektromaschine (3), die als Motor betreibbar und zum Anlassen des Verbrennungsmotors (2) verwendbar ist, eine Steuereinrichtung (11) sowie einen zum Anlassen des Verbrennungsmotors (2) verwendbaren Anlasser (13),
wobei bei einem bevorstehenden Anlassen des Verbrennungsmotors (2) die Steuereinrichtung (11) zur Auswahl der Elektromaschine (3) und/oder des Anlassers (13) zum Anlassen des Verbrennungsmotors (2) in Abhängigkeit wenigstens eines die Fahrdynamikanforderung und/oder die Momentenanforderung an den Hybridantrieb beschreibenden Betriebsparameters (22, 23) des Kraftfahrzeugs (1) und/oder einer Anforderung eines Steuergeräts (10) des Kraftfahrzeugs (1) ausgebildet ist,
**dadurch gekennzeichnet,**
**dass** die Steuereinrichtung zur Berücksichtigung wenigstens eines einen die Auswahl des Anlassers oder der Elektromaschine zum Anlassen des Verbrennungsmotors beeinflussenden Parameter dem eingelegten Gang zuordnenden Kennfeldes ausgebildet ist.

2. Kraftfahrzeug nach Anspruch 1,
**dadurch gekennzeichnet,**
**dass** die Steuereinrichtung (11) zur Auswahl des Anlassers (13) in Abhängigkeit der Stellung eines Gaspedals (19) und/oder der Dynamik der Betätigung eines Gaspedals (19) und/oder eines Bremspedals (20), insbesondere des Gradienten, und/oder in Abhängigkeit von einer aktuellen Zylinderstellung des Verbrennungsmotors (2) ausgebildet ist.

3. Kraftfahrzeug nach einem der vorangehenden Ansprüche,
**dadurch gekennzeichnet,**
**dass** die Steuereinrichtung (11) bei einer eine niedrige Beschleunigungsanforderung beschreibenden Gaspedalstellung und/oder einer eine niedrige Fahrdynamikanforderung beschreibenden Gaspedaldynamik zum Verwenden der Elektromaschine (3) und bei einer eine hohe Beschleunigungsanforderung beschreibenden Gaspedalstellung und/oder einer eine hohe Fahrdynamikanforderung beschreibenden Gaspedaldynamik und/oder bei einem schnellen Wechsel von einem Bremspedal (20) zu dem Gaspedal (19) zum Verwenden des Anlassers (13) zum Anlassen des Verbrennungsmotors (2) ausgebildet ist.

4. Kraftfahrzeug nach einem der vorangehenden Ansprüche,
**dadurch gekennzeichnet,**
**dass** die Steuereinrichtung zur Berücksichtigung eines den Fahrstil und/oder einen Fahrerwunsch beschreibenden Betriebsparameters als die Fahrdynamikanforderung beschreibender Betriebsparameter ausgebildet ist.

5. Kraftfahrzeug nach einem der vorangehenden Ansprüche,
**dadurch gekennzeichnet,**
**dass** als weiteres Steuergerät ein Getriebesteuergerät (10) vorgesehen ist, welches bei einer niedrigen Drehzahl und/oder abhängig von dem Zustand einer Anfahrkupplung (6) zum Senden einer Anforderung zur Auswahl des Anlassers (13) an die Steuereinrichtung (11) ausgebildet ist.

6. Kraftfahrzeug nach einem der vorangehenden Ansprüche,
**dadurch gekennzeichnet,**
**dass** die Steuereinrichtung zur Berücksichtigung des oder wenigstens eines weiteren einen die Auswahl des Anlassers oder der Elektromaschine zum Anlassen des Verbrennungsmotors beeinflussenden Parameter wenigstens einem weiteren Betriebsparameter, insbesondere der aktuellen Geschwindigkeit des Kraftfahrzeugs und/oder einer eingestellten Startvariante, zuordnenden Kennfeldes ausgebildet ist.

7. Kraftfahrzeug nach einem der vorangehenden Ansprüche,
**dadurch gekennzeichnet,**
**dass** ein Sensor zur Messung der Zylinderstellung des Verbrennungsmotors (2), insbesondere ein Kurbelwellensensor (21), vorgesehen ist.

8. Kraftfahrzeug nach einem der vorangehenden Ansprüche,
**dadurch gekennzeichnet,**
**dass** es zu einem Schleppstart und/oder einem Impulsstart des Verbrennungsmotors (2) durch die Elektromaschine (3) ausgebildet ist.

9. Kraftfahrzeug nach einem der vorangehenden Ansprüche,
**dadurch gekennzeichnet,**
**dass** zur Versorgung des Anlassers (13) eine Niedrigspannungsbatterie (15) vorgesehen ist, die eine niedrigere Spannung als eine zur Versorgung der Elektromaschine (3) vergesehene Hochspannungsbatterie (12) aufweist.

10. Kraftfahrzeug nach Anspruch 9,
**dadurch gekennzeichnet,**
**dass** die Steuereinrichtung (11) zusätzlich bei einem niedrigen Ladezustand der Niedrigspannungsbatterie (15) zum Verwenden der Elektromaschine (3) und bei einem niedrigen Ladezustand der Hochspannungsbatterie (12) zum Verwenden des Anlassers (13) zum Anlassen des Verbrennungsmotors (2) ausgebildet ist.

11. Verfahren zur Auswahl einer Elektromaschine (3) und/oder eines Anlassers (13) zum Anlassen eines Verbrennungsmotors (2) in einem Kraftfahrzeug (1) mit einem Hybridantrieb, umfassend einen Verbrennungsmotor (2), eine Elektromaschine (3), die als Motor betreibbar und zum Anlassen des Verbrennungsmotors (2) verwendbar ist, eine Steuereinrichtung (11) sowie einen zum Anlassen des Verbrennungsmotors (2) verwendbaren Anlasser (13),
wobei bei einem bevorstehenden Anlassen des Verbrennungsmotors (2) die Steuereinrichtung (11) zur Auswahl der Elektromaschine (3) und/oder des Anlassers (13) zum Anlassen des Verbrennungsmotors (2) in Abhängigkeit wenigstens eines die Fahrdynamikanforderung und/oder die Momentenanforderung an den Hybridantrieb beschreibenden Betriebsparameters (22, 23) des Kraftfahrzeugs (1) und/oder einer Anforderung eines Steuergeräts (10) des Kraftfahrzeugs (1) ausgebildet ist,
**dadurch gekennzeichnet,**
**dass** die Auswahl des Anlassers (13) oder der Elektromaschine (3) zum Anlassen des Verbrennungsmotors (2) durch die Steuereinrichtung (11) unter Berücksichtigung wenigstens eines einen die Auswahl beeinflussenden Parameter dem eingelegten Gang zuordnenden Kennfeldes erfolgt.

## Claims

1. A motor vehicle (1) with a hybrid drive, comprising an internal combustion engine (2), an electric machine (3) that can be operated as a motor and can be used for starting the internal combustion engine (2), a control device (11) as well as a starter (13) that can be used for starting the internal combustion engine (2),
wherein in the case of an imminent start of the internal combustion engine (2), the control unit (11) is designed to select the electric machine (3) and/or the starter (13) for starting the internal combustion engine (2) as a function of at least one operating parameter (22, 23) of the motor vehicle (1), which indicates the driving dynamics demand and/or the torque demand on the hybrid drive and/or a demand of a control device (10) of the motor vehicle (1),
**characterised in that**
the control unit is designed to take into account at least one engine map that associates a parameter influencing the selection of the starter or of the electric machine for starting the internal combustion engine with the gear position.

2. The motor vehicle as claimed in claim 1,
**characterised in that**
the control unit (11) is designed to select the starter (13) as a function of the position of an accelerator pedal (19) and/or of the dynamics of the actuation of an accelerator pedal (19) and/or a brake pedal (20), in particular of the gradient, and/or as a function of a current cylinder position of the internal combustion engine (2).

3. The motor vehicle as claimed in any one of the preceding claims,
**characterised in that**
the control unit (11) is designed, in the case of a accelerator pedal position indicating a low acceleration demand and/or of accelerator pedal dynamics indicating a low driving dynamics demand, to use the electric machine (3) and, in the case of an accelerator pedal position indicating a high acceleration demand and/or accelerator pedal dynamics indicating a high driving dynamics demand and/or in the case of a rapid change from a brake pedal (20) to the accelerator pedal (19), to use the starter (13) for starting the internal combustion engine (2).

4. The motor vehicle as claimed in any one of the preceding claims,
**characterised in that**
the control unit is designed to take into account an operating parameter indicating the driving style and/or a driver's desire as the operating parameter indicating the driving dynamics demand.

5. The motor vehicle as claimed in any one of the preceding claims,
**characterised in that**
as a further control device, a transmission control device (10) is provided, which is designed to transmit, in the case of a low rotary speed and/or as a function of the condition of a starting clutch (6), a demand for selecting the starter (13) to the control unit (11).

6. The motor vehicle as claimed in any one of the preceding claims,
**characterised in that**
the control unit is designed to take into account the or at least one further engine map that associates a parameter influencing the selection of the starter or of the electric machine for starting the internal combustion engine with at least one further operating parameter, in particular the current speed of the motor vehicle and/or a set starting variant.

7. The motor vehicle as claimed in any one of the preceding claims,
**characterised in that**
a sensor for measuring the cylinder position of the internal combustion engine (2), in particular a crankshaft sensor (21), is provided.

8. The motor vehicle as claimed in any one of the preceding claims,
**characterised in that**
it is designed for a tow start and/or an pulse start of the internal combustion engine (2) by the electric machine (3).

9. The motor vehicle as claimed in any one of the preceding claims,
**characterised in that**
for the supply of the starter (13), a low-voltage battery (15) is provided that has a lower voltage than a high-voltage battery (12) provided for the supply of the electric machine (3).

10. The motor vehicle as claimed in claim 9,
**characterised in that**
the control unit (11) is additionally designed to use the electric machine (3) in the case of a low state of charge of the low-voltage battery (15), and to use the starter (13) for starting the internal combustion engine (2) in the case of a low state of charge of the high-voltage battery (12).

11. A method for selecting an electric machine (3) and/or a starter (13) for starting an internal combustion engine (2) in a motor vehicle (1) having a hybrid drive, comprising an internal combustion engine (2), an electric machine (3) that can be operated as a motor and can be used for starting the internal combustion engine (2), a control unit (11) as well as a starter (13) that can be used for starting the internal combustion engine (2),
wherein in the case of an imminent start of the internal combustion engine (2), the control unit (11) is designed to select the electric machine (3) and/or the starter (13) for starting the internal combustion engine (2) as a function of at least one operating parameter (22, 23) of the motor vehicle (1), which indicates the driving dynamics demand and/or the torque demand on the hybrid drive and/or a demand of a control device (10) of the motor vehicle (1),
**characterised in that**
the selection of the starter (13) or of the electric machine (3) for starting the internal combustion engine (2) by the control unit (11) is carried out taking into account at least one engine map that associates a parameter influencing the selection to a gear position.

## Revendications

1. Véhicule automobile (1) pourvu d'un entraînement hybride, comprenant un moteur à combustion interne (2), une machine électrique (3), qui peut être entraînée comme moteur et utilisable pour le démarrage du moteur à combustion interne (2), un dispositif de commande (11) ainsi qu'un démarreur (13) utilisable pour le démarrage du moteur à combustion interne (2),
dans lequel, dans le cas d'un démarrage imminent du moteur à combustion interne (2), le dispositif de commande (11) est conçu pour sélectionner la machine électrique (3) et/ou le démarreur (13) pour démarrer le moteur à combustion interne (2) en fonction d'au moins un paramètre de fonctionnement (22, 23) du véhicule automobile (1) décrivant la demande de dynamique de mouvement et/ou la demande des moments sur l'entraînement hybride et/ou d'une demande d'un appareil de commande (10) du véhicule automobile (1),
**caractérisé en ce que** :
le dispositif de commande est conçu pour tenir compte d'au moins un diagramme caractéristique affectant un paramètre influençant la sélection du démarreur ou de la machine électrique pour le démarrage du moteur à combustion interne à la vitesse passée.

2. Véhicule automobile selon la revendication 1, **caractérisé en ce que** :
le dispositif de commande (11) est conçu pour sélectionner le démarreur (13) en fonction de la position d'une pédale d'accélérateur (19) et/ou de la dynamique de commande d'une pédale d'accélérateur (19) et/ou d'une pédale de frein (20), en particulier du gradient, et/ou en fonction d'une position de cylindre courante du moteur à combustion interne (2).

3. Véhicule automobile selon l'une quelconque des revendications précédentes,
**caractérisé en ce que** :
le dispositif de commande (11) est conçu, dans le cas d'une position de la pédale d'accélérateur décrivant une faible demande d'accélération et/ou d'une dynamique de pédale d'accélérateur décrivant une faible demande de dynamique de mouvement, pour utiliser la machine électrique (3) et, dans le cas d'une position de la pédale d'accélérateur décrivant une forte demande d'accélération et/ou d'une dynamique de la pédale d'accélérateur décrivant une forte demande de dynamique de mouvement et/ou dans le cas d'un changement rapide d'une pédale de frein (20) à la pédale d'accélérateur (19), pour utiliser le démarreur (13) pour démarrer le moteur à combustion interne (2).

4. Véhicule automobile selon l'une quelconque des revendications précédentes,
**caractérisé en ce que** :
le dispositif de commande est conçu pour tenir compte d'un paramètre de fonctionnement décrivant le style de conduite et/ou un souhait du conducteur comme paramètre de fonctionnement décrivant la demande de dynamique de mouvement.

5. Véhicule automobile selon l'une quelconque des revendications précédentes,
**caractérisé en ce que** :
il est prévu comme autre appareil de commande un appareil de commande de boîte de vitesse (10) qui est conçu, lors d'un faible nombre de tours et/ou en fonction de l'état d'un couple de démarrage (6), pour envoyer une demande de sélection du démarreur (13) sur le dispositif de commande (11).

6. Véhicule automobile selon l'une quelconque des revendications précédentes,
**caractérisé en ce que** :
le dispositif de commande est conçu pour tenir compte du ou au moins d'un autre diagramme caractéristique affectant un paramètre influençant la sélection du démarreur ou de la machine électrique pour démarrer le moteur à combustion interne, au moins d'un autre paramètre de fonctionnement, en particulier de la vitesse courante du véhicule automobile et/ou d'une variante de démarrage réglée.

7. Véhicule automobile selon l'une quelconque des revendications précédentes,
**caractérisé en ce que** :
un capteur est prévu pour mesurer la position du cylindre du moteur à combustion interne (2), en particulier un capteur de vilebrequin (21).

8. Véhicule automobile selon l'une quelconque des revendications précédentes,
**caractérisé en ce que** :
il est conçu pour un démarrage d'entraînement et/ou un démarrage pulsé du moteur à combustion interne (2) par la machine électrique (3).

9. Véhicule automobile selon l'une quelconque des revendications précédentes,
**caractérisé en ce que**,
pour alimenter le démarreur (13), il est prévu une batterie de basse tension (15) qui présente une tension plus faible qu'une batterie haute tension (12) prévue pour alimenter la machine électrique (3).

10. Véhicule automobile selon la revendication 9, **caractérisé en ce que** :
le dispositif de commande (11) est conçu en outre, lors d'un état de chargement faible de la batterie à basse tension (15), pour utiliser la machine électrique (3) et, dans le cas d'un état de chargement faible de la batterie de haute tension (12), pour utiliser le démarreur (13) pour démarrer le moteur à combustion interne (2).

11. Procédé de sélection d'une machine électrique (3) et/ou d'un démarreur (13) pour démarrer un moteur à combustion interne (2) dans un véhicule automobile (1) pourvu d'un entraînement hybride, comprenant un moteur à combustion interne (2), une machine électrique (3), qui peut être entraînée comme moteur et peut être utilisée pour le démarrage du moteur à combustion interne (2), un dispositif de commande (11) ainsi qu'un démarreur (13) utilisable pour démarrer le moteur à combustion interne (2),
dans lequel, dans le cas d'un démarrage imminent du moteur à combustion interne (2), le dispositif de commande (11) est conçu pour sélectionner la machine électrique (3) et/ou le démarreur (13) pour démarrer le moteur à combustion interne (2) en fonction d'au moins un paramètre de fonctionnement (22, 23) du véhicule automobile (1) décrivant la demande de dynamique de mouvement et/ou la demande de moments sur l'entraînement hybride et/ou une demande d'un appareil de commande (10) du véhicule automobile (1),
**caractérisé en ce que** :
la sélection du démarreur (13) ou de la machine électrique (3) pour démarrer le moteur à combustion interne (2) se fait par le dispositif de commande (11) en tenant compte au moins d'un diagramme caractéristique affectant un paramètre influençant la sélection à la vitesse passée.
